# EUROPEAN PATENT APPLICATION

(11) **EP 0 994 452 A2**
(43) Date of publication of application: **19.04.2000**
(21) Application number: 99120020.5
(22) Date of filing: 15.10.1999
(51) Int. Cl.: G09B 19/08, B42F 21/00

(54) **Multilanguage dictionary**

(30) Priority: 16.10.1998 IT VI980086
(71) Applicant: Marchioretto, Luca, 36061 Bassano del Grappa (VI) (IT)
(72) Inventor: Pizzato, Giuseppe, 36061 Bassano del Grappa (VI) (IT)
(74) Representative: Bonini, Ercole

(57) **Abstract**

The invention realizes a multilanguage dictionary comprising for each language a series of words listed in an alphabetic order, where each double page of the dictionary, made by a recto and a verso belonging to some sheets located in succession, comprises a number of columns (1, 2, 3, 4, 5) equal to the number of the dictionary languages and a plurality of lines numbered progressively on at least a vertical margin (6) of each double page where each column of each language comprises only words of the same language located in an alphabetic order. As much referential number groups (8, 81, 82) are associated to every word (7, 71, 72) of each language as the number of languages treated less one, each element of each said group is drawn up in columns under the referential language abbreviation (11, 12, 13, 14) and corresponds to the line progressive number where the corresponding word in the desired language is located.

## Description

The present invention relates to a multilanguage dictionary, which can obtain the best saving of the support forming such a dictionary.

When a paper support is used, that is the dictionary is like a book, it will be seen after how the dictionary of the invention allows the use of a limited number of pages, even if it gives all the correspondences the dictionary needs, relating to the aims it is resolved.

Multilanguage dictionaries are known, meaning with this definition dictionaries which group words belonging to more than two languages, for example three, which are substantially organized so that they present a first section where the words correspondence of a language with the words of a second language is expressed (e.g. the correspondence between Italian and French). The correspondence between the same first language and a third language (e.g. Italian with English) is then expressed in a second section.

In another section, the correspondence opposite to that of the first section (from French into Italian) is expressed; in a further section the correspondence opposite to that of the second section (from English into Italian).

In the case of the cited example, we see that a dictionary presenting the correspondence between the Italian language and two foreign languages, French and English, has to repeat twice the same Italian words with beside the correspondent French translation in a section and the correspondent English translation in another section.

The same Italian words will be found then, listed for two times again, in the other sections presenting the opposite correspondence in French - Italian and English - Italian.

Substantially the multilanguage dictionaries now in commerce are autonomous dictionaries grouped in a single volume and are used mainly by people with at least two different languages and/or to explain their words.

In the above cited example, a multilanguage dictionary comprising the Italian - French and Italian - English sections and the relative sections of opposite correspondence will allow the communication between Italian and French people, or between Italian and English people, but it couldn't be used by a French man who wants to translate a word into English or by an English man who wants to translate a word into French, unless other two sections are added, i.e. other two complete dictionaries with the French - English correspondence and its opposite English - French.

The number of dictionary sections would increase towards six, i.e. twice the languages treated, which already implies a great increase of the pages number of the dictionary, and so of the volume and of the weight thereof.

We could also theorically suppose the possibility of searching the correspondence between the non mother-tongue languages by an intermediate passage through it, but this would be completely hard.

The absolute impracticability of a dictionary organization such as above would be seen when we would like to treat a further language besides the three just mentioned. The correspondence among all the four languages, in a direct and in its opposite section, would imply twelve sections to be used and the words of the same language to be repeated six times.

The principal aim of the present invention is the realization of a multilanguage dictionary not particularly addressed to a particular nationality, but that can be used independently from the people of any language included among the languages treated.

We want also that said dictionary can be immediately consulted and have limited dimensions, so that it can be effectively used in the most different occasions, especially during the trips in the nations where one of the treated languages is spoken.

A further aim we want to reach by the use of the dictionary according to the invention is the writing on the dictionary, for every language, of each word only once and the association to each word of numerical elements with an univocal correspondence with all the other languages, so that it is an easy and immediate thing to find the word correspondence in the searched language.

Another aim of the invention is to diminish, as much as it is possible, the referential element number necessary to reach the univocal correspondence between the words of one language and the words of the other languages treated, without damaging the dictionary clearness.

All the above mentioned aims and others which will be better explained later are reached by a multilanguage dictionary which, according to the claims, comprises for every language a series of words listed in alphabetical order and is characterized in that every double page of the dictionary, made by a recto and a verso belonging to sheets located in succession, comprises a number of columns equal to the languages number treated in the dictionary and a plurality of progressively and continuously numbered lines on at least one margin on every double page. Each column of every language comprising only words of the same language located in an alphabetical succession, each word being associated to referential numerical elements groups equal to the languages treated less one. Each element of each said group being drawn up under the relative language abbreviation and corresponding to the line progressive number where the correspondent words in the desired language is.

Advantageously, according to the invention, each double page of the dictionary comprises, drawn up in columns and in alphabetical order, the commonly used words of the various languages placed on the same line, each word being placed side by side with its group of line referential numbers, according to the succession of natural numbers in correspondence with the right margin of each double page.

It is obvious that doing so the research, in every language, of the word whose translation in any other of the languages treated we want to find is easier. The translation will be read on the numbered line which the referential number read in the group placed abreast the word to be translated refers to, in correspondence with the column marked by the abbreviation of the desired language.

According to a preferred embodiment of the invention, the names and the abbreviations of the various languages treated are repeated also along the lower margin of each double page.

According to said preferred embodiment, at the beginning of each language column of each double page some initial letters of the first word of the word list reported in the column below.

The greatest advantage resulting from the invention is that all the words of each language are listed only once. Further, the space taken by the referential elements sufficient to give the translation of every word of a language in another word of another dictionary language is very reduced, being a group of numbers placed side by side on the same line beside each word reported.

In that way works which today have to be consulted on the table, or result too much big to be transported by people who travel, can be made pocket-works.

It is obvious that one of the greatest advantages obtained by the dictionary of the invention is that the user of the same can easily bring it with him without extreme impediments.

Another advantage to be underlined is still that the same edition of the dictionary, without any variation, can be utilized by every mother-tongue people contained in the languages group treated by the dictionary, which wants to search the correspondences of its language in any other of the languages treated.

In other words, we can say that the multilanguage dictionary which treats for example Italian, French, English, German and Spanish can be published in the same edition in Rome, as in Paris, as in London, as in Berlin, as in Madrid.

Further characteristics and advantages of the invention will be better underlined in the description of a preferred embodiment of the same, given as an indicative but not limitative title and illustrated in the accompaining drawings, wherein.
- fig. 1 represents one of the double pages which make the dictionary;
- fig. 2 underlines, as an example, a general line of words belonging to said double page, with the referential numbers of the lines, which every word of the languages treated refers to in order to find the correspondences in the other languages, on the same line;
- fig. 3 underlines, always as an example, the first word belonging to said line which the first of said referential numbers, relative to the French translation of a generic word among the words listed, refers to.

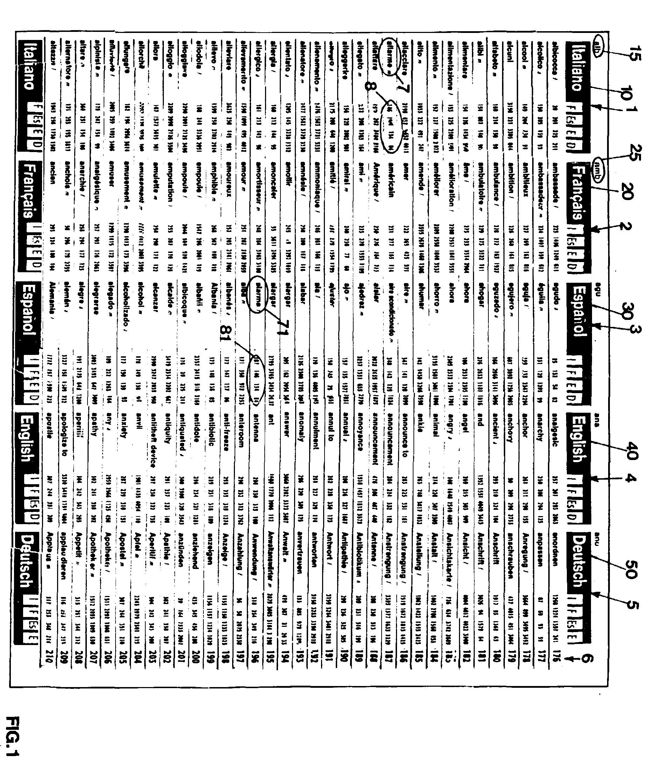

Referring to fig. 1, we can see that the double page here represented is subdivided in five columns respectively indicated by 1, 2, 3, 4 and 5, each one presenting, in an alphabetical order, words of the relative language, whose name is entirely reported at the beginning of the relative column.

More in detail, in column 1 Italian language is treated, as it is inferable by the name "ITALIANO" 10 reported at the beginning of the column itself. In this column the words commonly used belonging to the Italian language are preferably reported in an alphabetical order.

In column 2, under the name "FRANCAIS" 20, we find the words commonly used in the French language in an alphabetical order.

In column 3, under the name "ESPANOL" 30, we find the words commonly used in the Spanish language in an alphabetical order.

In column 4, under the name "ENGLISH" 40, we find the words commonly used in the English language in an alphabetical order.

In column 5, under the name "DEUTSCH" 50, we find the words commonly used in the German language in an alphabetical order.

Every line of such columns is marked, in correspondence with the right margin of each double page, with an entire progressive number continuing in the following double pages, so that only one line number corresponds to each dictionary line.

In the case of the example of fig. 1, referring to a generic double page of the dictionary, the lines are the numbered ones on the right number 6, beginning from the entire number 176 to finish with the entire number 210. So they are 35 lines for each double page.

In said double page, for example, in column 1 there is the word "allarme", indicated by 7, in correspondence with line 187, while its correspondent word "alarma" in Spanish language is present in column 3, indicated by 71, in correspondence with line 196 belonging to the same double page.

On the contrary, the correspondent word "alarm" in English language is not present in said double page, because it is located on line 134, belonging to the previous double page.

In order to search the line references which every word to translate refers to, it is necessary to observe that a group (8) of entire numbers equal to the languages treated less one (in the example 5-1=4) is placed side by side on the right of every word of each language.

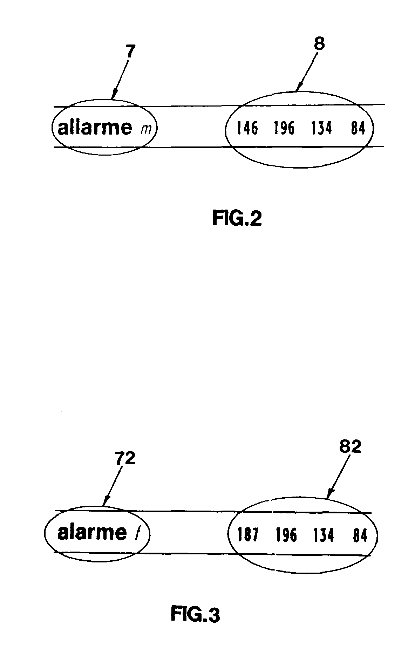

Said numbers belonging to each group are drawn up with those numbers correspondent of all the other lines of the double page under the abbreviation (11, 12, 13, 14) correspondent to the language which they refer to. In the example of the line evidenced in fig. 2, the group (8) of numbers placed beside the word "allarme" 7, taken above as an example, are in order: 146, 196, 134, 84. The first of them referring to the French language indicated at the beginning of the respective subcolumn 11 of the column 1 by the abbreviation "F", the second to the Spanish language indicated at the beginning of the subcolumn 12 by the abbreviation "Es.", the third to the English language indicated at the beginning of the subcolumn 13 by "E", the fourth, finally, to the German language indicated at the beginning of the subcolumn 14 by the letter "D".

The translation in the French language of the Italian word "allarme" indicated by 7 on line 187 of the double page of fig. 1 in column 1 relative to the language "italiano" and evidenced in fig. 2, it is therefore necessary to search for line 146 of the previous double page, in correspondence with the column 2 relative to the language "Francais" underlined in fig. 3. The French correspondence is therefore the word "alarme" indicated by 72.

Likewise, the translation of the same word "allarme" in Spanish language must be searched on line 196, belonging to the same double page belonging to the Italian word and underlined in fig. 2. In correspondence with column 3 relative to the language "Espanol" we will read the word "alarma" indicated by 71.

Likewise, the correspondences of the word "allarme" in English and German languages will be found respectively on lines 134 and 84 belonging to double pages different from each other and the original page, reading the translations searched in correspondence with the column 4, relative to the language "English", and 5 relative to the language "Deutsch" respectively.

Referring to what above said about the non mother-tongue word search ways into which we want to translate Italian words, we can easily understand that the dictionary of the invention doesn't endow any language in particular among those treated. The described search infact is made using the same ways for each of the languages which we start from, making therefore the conceived dictionary usable with the same facility and quickness by any people belonging to a nation where one of the languages treated in the dictionary itself is spoken.

In order to facilitate this search, in correspondence with the upper margin of each double page and relative to each column, some initial letters of the first word listed in said column are reported.

So in the example of fig. 1, relative to the first word "albicocca" belonging to the language "italiano" on column 1, the three initial letters "alb" indicated by 15 are reported.

On column 2, relative to the language "Francais" beginning with the word "ambassade" the three letters "amb" indicated by 25 are reported; and so on for the other three letters here reported.

The chose of presenting in a double page all the languages treated in the multilanguage dictionary serve as essential aim to make the dictionary in an alphabetical order, increasing from letter A to letter Z and from the first page until the last of each language.

An organization of each double page of the dictionary like that in fig. 1 shows also that the same edition with the same print types and the same organization, therefore the same dictionary, can be equally distributed in any nation wherein the language spoken is among those treated, without the necessity of modifying or adapting someway the edition of the dictionary itself.

We want also to underline that the words of each of the languages treated are reported only once, with a great advantage about the use of alphabetical types.

It is still to note that the number of reference elements for the correspondence among the different languages is less relative to the traditional multilanguage dictionaries now in use, but first of all it is clear that said reference elements are mainly entire numbers which are easily interpretable by everybody. Then the correspondence of said numbers with the lines numbered progressively and continuously on the right margin of each double page makes the search for the correspondence among the languages extremely easy. It is only necessary to turn over the pages with the eyes looking at said margin and stop the operation when the number of line searched is found.

We can therefore understand well that all the expected results have been reached with the invention now described.

In particular, we have been able to reduce at the minimum the number of alphabetical types to use and the number of reference elements necessary to realize a multilanguage dictionary.

Secondly, said reference elements occupy a little space, being prevailingly of a numerical type and not words formed by a plurality of graphic types.

All the results just said lead also to the not negligible advantage of the reduction of volume and of the support weight through which the dictionary is made.

Naturally the presentation of the words and of the reference elements of the dictionary can vary depending on the taste and on the necessities, the way of presentation not being subject of the patent.

During the realization phase of the dictionary some variations could be made because of the graphic, pagination necessities, or others, and this is considered as belonging to the idea explained in the following claims.

## Claims

1. Multilanguage dictionary comprising for each language a series of words listed in an alphabetic order, **characterized in that** each double page of the dictionary, made by a recto and a verso belonging to some sheets located in succession, comprises a number of columns (1, 2, 3, 4, 5) equal to the number of the dictionary languages and a plurality of lines numbered progressively and continuously on at least a vertical margin (6) of each double page, each column of each language comprising only words of the same language located in an alphabetic order, being as much referential number groups (8, 81, 82) associated to every word (7, 71, 72) of each language as the number of languages treated less one, each element of each said group being drawn up in columns under the referential language abbreviation (11, 12, 13, 14) and corresponding to the line progressive number where the corresponding word in the desired language is located.

2. Multilanguage dictionary according to claim 1), **characterized in that** the mother tongue name (10, 20, 30, 40, 50) relating to the relative language is associated to every series of ordered words.

3. Multilanguage dictionary according to claim 1), **characterized in that** it has, on every double page and in correspondence with the right margin, a column (6) where the number of the dictionary lines is written in progression.

4. Multilanguage dictionary according to claim 1), **characterized in that** in correspondence with the upper margin of each double page, beside each mother-tongue name of the languages treated, abbreviations (11, 12, 13, 14), relative to the remaining languages, are reported, which the line reference numbers drawn up under said abbreviations refer to.

5. Multilanguage dictionary according to claim 1), **characterized in that,** in correspondence with the upper margin of each double page and relative to each column (1, 2, 3, 4, 5), some initial letters (15, 25) of the first word listed in said column are reported.
